# EUROPEAN PATENT APPLICATION

(11) **EP 2 811 212 A1**
(43) Date of publication of application: **10.12.2014**
(21) Application number: 12867529.5
(22) Date of filing: 22.10.2012
(51) Int. Cl.: F16L 11/04, B29C 47/00, C08K 5/10, C08L 77/00, B29K 77/00, B29L 23/00

(54) **RESIN HOSE AND METHOD FOR PRODUCING SAME**

(30) Priority: 30.01.2012 JP 2012016285
(71) Applicant: Sumitomo Riko Company Limited, Komaki, Aichi (JP)
(72) Inventor: MIZUTANI, Koji, AICHI 485-8550 (JP); KATAYAMA, Kazutaka, AICHI 485-8550 (JP)
(74) Representative: Müller-Boré & Partner Patentanwälte PartG mbB
(86) International application number: PCT/JP2012/077262
(87) International publication number: WO 2013/114689

(57) **Abstract**

To provide a resin hose excellent in barrier property (fuel barrier property or gas barrier property) and flexibility, the resin hose includes a resin layer (1) containing the following components (A) and (B) as main components thereof, and containing the following component (C):
(A) an aliphatic polyamide;
(B) a semi-aromatic polyamide; and
(C) diisobutyl adipate,
in which the resin layer (1) is formed of a sea phase (2) formed of the components (A) to (C), and needle-like island phases (3) each formed only of the component (B), the needle-like island phases (3) being arranged along a longitudinal direction of the hose.

## Description

### [Technical Field]

The present invention relates to a resin hose and a method of producing the same, and more specifically, to a resin hose to be used as, for example, a fuel hose or a refrigerant-transporting hose (such as an air conditioner hose or a radiator hose) of an automobile, and a method of producing the same.

### [Background Art]

A fuel hose to be mounted on an automobile or the like is demanded to have both of flexibility and barrier property (low permeability). To meet the demand, combined use of a semi-aromatic polyamide and an aliphatic polyamide has been considered (see, for example, Patent Literatures 1 and 2).

### [Citation List]

### [Patent Literature]

[PTL 1] JP 2004-352790 A
[PTL 2] JP 2010-77221 A

### [Summary of the Invention]

### [Problem to be solved by the Invention]

However, when the semi-aromatic polyamide and the aliphatic polyamide are simply used in combination, both the components completely mix with each other to fall into a completely compatible state, resulting in insufficient barrier property and flexibility.

The present invention has been made in view of such circumstances, and an object of the present invention is to provide a resin hose which is excellent in barrier property (fuel barrier property or gas barrier property) and flexibility, and a method of producing the same.

### [Means for solving the Problem]

The inventors of the present invention have made extensive studies in order to obtain a resin hose, such as a fuel hose, which is excellent in barrier property (fuel barrier property or gas barrier property) and flexibility. In the course of the studies, the inventors have found the following. When an aliphatic polyamide (A) and a semi-aromatic polyamide (B) are simply mixed, both the components completely mix with each other to fall into a completely compatible state, and hence only the average performance of the components (A) and (B) can be obtained. However, when diisobutyl adipate (C) is used in combination therewith, the aliphatic polyamide (A) and the semi-aromatic polyamide (B) do not fall into a completely compatible state, but fall into a semi-compatible state. This causes needle-like island phases each formed only of the semi-aromatic polyamide (B) to be present in a sea phase containing the aliphatic polyamide (A) and the semi-aromatic polyamide (B) as main components. In addition, the needle-like island phases are arranged along the longitudinal direction (extrusion direction) of the hose, and hence there are obtained barrier property (fuel barrier property or gas barrier property) and flexibility each of which is more excellent than the average performance of the aliphatic polyamide (A) and the semi-aromatic polyamide (B). Thus, the inventors have reached the present invention.

That is, according to a first gist of the present invention, there is provided a resin hose, including a resin layer containing the following components (A) and (B) as main components thereof, and containing the following component (C):
(A) an aliphatic polyamide;
(B) a semi-aromatic polyamide; and
(C) diisobutyl adipate,
in which the resin layer is formed of a sea phase formed of the components (A) to (C), and needle-like island phases each formed only of the component (B), the needle-like island phases being arranged along a longitudinal direction of the resin hose.

Further, according to a second gist of the preset invention, there is provided a method of producing the above-mentioned resin hose, the method including extrusion at a temperature of from 260 to 330°C.

### [Effects of the Invention]

As described above, the resin hose of the present invention includes the resin layer formed of the sea phase formed of the components (A) to (C), and the needle-like island phases each formed only of the component (B), the needle-like island phases being arranged along a longitudinal direction (extrusion direction) of the hose. Therefore, the diffusion of a fuel, etc., in the thickness direction of the hose (direction from the inner peripheral side of the hose toward the outer peripheral side thereof) is inhibited by the needle-like island phases. As a result, the fuel, etc., diffuse in the direction from the inner peripheral side of the hose toward the outer peripheral side thereof in such a manner that the fuel, etc. , thread their ways through the needle-like island phases arranged along the longitudinal direction of the hose. Accordingly, the diffusion paths of the fuel, etc., become longer as compared to the case of linear diffusion in the thickness direction of the hose, and hence the barrier property (fuel barrier property or gas barrier property) is improved. Further, the sea phase (base material) of the resin layer contains as main components the aliphatic polyamide (A) and the semi-aromatic polyamide (B) in a semi-compatible state, and hence the flexibility of the hose is excellent as well.

### [Brief Description of the Drawings]

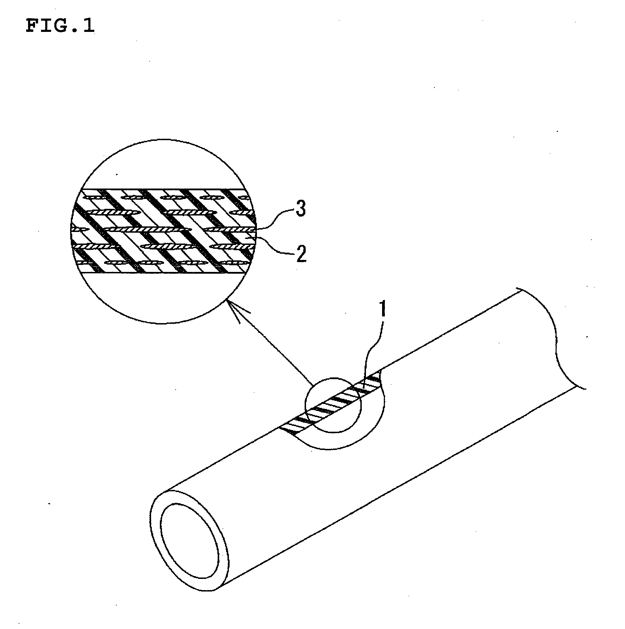

[FIG. 1] A schematic view (partially enlarged cross-sectional view) illustrating construction of a resin hose of the present invention.

### [Modes for carrying out the Invention]

Next, embodiments of the present invention are described in detail. However, the present invention is not limited to these embodiments.

A resin hose of the present invention includes a resin layer containing an aliphatic polyamide (A) and a semi-aromatic polyamide (B) as main components thereof, and containing diisobutyl adipate (C).

It should be noted that, in the present invention, the main components mean components which largely affect the characteristics of the resin layer, and the content of such components is generally 50 wt% or more of the entirety of a resin composition which forms the resin layer.

In the present invention, the significant feature resides in that the resin layer is formed of a sea phase formed of the components (A) to (C), and needle-like island phases each formed only of the semi-aromatic polyamide (B), the needle-like island phases being arranged along the longitudinal direction of the hose.

First, each component constituting the resin composition which forms the resin layer is specifically described.

### <<Aliphatic polyamide (A)>>

Examples of the aliphatic polyamide (A) include polyamide 46 (PA46), polyamide 6 (PA6), polyamide 66 (PA66), polyamide 92 (PA92), polyamide 99 (PA99), polyamide 610 (PA610), polyamide 612 (PA612), polyamide 11 (PA11), polyamide 912 (PA912), polyamide 12 (PA12), a copolymer of polyamide 6 and polyamide 66 (PA6/66), and a copolymer of polyamide 6 and polyamide 12 (PA6/12). One kind of those polyamides is used alone, or two or more kinds thereof are used in combination. Of those, from the viewpoints of heat resistance and resistance to a snow melting agent, PA612 is preferred.

### <<Semi-aromatic polyamide (B)>>

Examples of the semi-aromatic polyamide (B) include polyamide 4T (PA4T), polyamide 6T (PA6T), polyamide MXD6 (PAMXD6), polyamide 9T (PA9T), polyamide 10T (PA10T), polyamide 11T (PA11T), polyamide 12T (PA12T), and polyamide 13T (PA13T). One kind of those polyamides is used alone, or two or more kinds thereof are used in combination. Of those, in terms of fuel barrier property, hydrolysis resistance, and rigidity, PA9T is preferred.

In the present invention, the weight mixing ratio of the aliphatic polyamide (A) to the semi-aromatic polyamide (B) is preferably (A)/(B)=10/90 to 60/40, particularly preferably (A)/(B)=10/90 to 30/70. When the amount of the aliphatic polyamide (A) is excessively small (the amount of the component (B) is excessively large), there is observed such a tendency that flexibility is poor, and, when the amount of the aliphatic polyamide (A) is excessively large (the amount of the component (B) is excessively small), there is observed such a tendency that fuel barrier property and rigidity are deteriorated.

### <<Diisobutyl adipate (C)>>

The diisobutyl adipate (C) has an action of inhibiting the aliphatic polyamide (A) and the semi-aromatic polyamide (B) from falling into a completely compatible state.

The content of the diisobutyl adipate (C) falls within the range of preferably 0.1 part by weight or more and less than 2 parts by weight, particularly preferably 0.5 to 1. 5 parts by weight with respect to 100 parts by weight of the total of the aliphatic polyamide (A) and the semi-aromatic polyamide (B) ((A)+(B)). When the content of the diisobutyl adipate (C) falls outside the range, there is observed such a tendency that diisobutyl adipate (C) is present alone, and fuel barrier property is deteriorated.

It should be noted that, in the resin composition for forming the resin layer of the present invention, there may be appropriately blended, for example, an impact modifier, a plasticizer, a filler, an anti-hydrolysis material, an agent for heat-resisting and anti-oxidizing, a UV protection agent, an antioxidant, a softening component, a nucleating agent, and a lubricant in addition to the components (A) to (C) as required.

The impact modifier is used from the viewpoints of improving the flexibility and the impact resistance, and examples thereof include an ionomer resin, a modified polyolefin, a polyether amide elastomer, a polyester amide elastomer, a polyether ester amide elastomer, a polyether ester elastomer, an acrylic rubber, an ethylene-propylene-based rubber, a butyl rubber, a nitrile rubber, a fluororubber, and a silicone rubber. One kind of those agents is used alone, or two or more kinds thereof are used in combination.

The content of the impact modifier is 0.1 to 10 parts by weight, preferably 3 to 5 parts by weight with respect to 100 parts by weight of the total of the aliphatic polyamide (A) and the semi-aromatic polyamide (B) ((A)+(B)).

In addition, as the plasticizer, for example, one kind or more compounds selected from alkylamides are preferred, and examples thereof include N-ethyl-o-toluenesulfonic acid butylamide, N-ethyl-p-toluenesulfonic acid butylamide, N-ethyl-p-toluenesulfonic acid 2-ethylhexylamide, N-propyl-p-toluenesulfonic acid amide, p-toluenesulfonic acid 1-ethylhexyl ester, and N-butylbenzenesulfonamide. One kind of those compounds is used alone, or two or more kinds thereof are used in combination.

The content of the plasticizer is 0.1 to 10 parts by weight, preferably 3 to 5 parts by weight with respect to 100 parts by weight of the total of the aliphatic polyamide (A) and the semi-aromatic polyamide (B) ((A)+(B)).

The resin composition may be produced, for example, as follows. That is, the resin composition may be prepared by appropriately blending the aliphatic polyamide (A), the semi-aromatic polyamide (B), and the diisobutyl adipate (C) with other components such as the impact modifier and the plasticizer as required, and kneading the mixture with a co-rotating twin-screw kneader, or the like.

Next, the resin hose of the present invention is described.

FIG. 1 is a schematic view (partially enlarged cross-sectional view) illustrating a resin hose having a single-layer structure formed only of a resin layer 1.

In the resin layer 1, needle-like island phases 3 each formed only of the semi-aromatic polyamide (B) are dispersed in a sea phase 2 containing the aliphatic polyamide (A) and the semi-aromatic polyamide (B) as main components thereof, and containing diisobutyl adipate (C). In addition, the needle-like island phases 3 are arranged along the longitudinal direction (extrusion direction) of the hose.

In FIG. 1, the needle-like island phases 3 are arranged along the longitudinal direction (extrusion direction) of the hose so that a diameter (D1) of each of the needle-like island phases 3 that are arranged in the vicinity of the inner peripheral surface of the hose and in the vicinity of the outer peripheral surface of the hose is shorter than a diameter (D2) of each of the needle-like island phases 3 which are arranged in the central portion of the hose. When the needle-like island phases 3 are arranged as described above, the needle-like island phases 3, which are short in diameter, and arranged in the vicinity of the inner peripheral surface of the hose and in the vicinity of the outer peripheral surface of the hose, mainly allow the flexibility to be secured, and the needle-like island phases 3, which are long in diameter and arranged in the central portion of the hose, mainly allow the barrier property to be secured. As a result, a balance between the flexibility and the barrier property is improved.

The diameter (D1) of each of the needle-like island phases 3, which are arranged in the vicinity of the inner peripheral surface of the hose and in the vicinity of the outer peripheral surface of the hose, is generally 10 to 40 nm, preferably 20 to 30 nm, and the diameter (D2) of each of the needle-like island phases 3 which are arranged in the central portion of the hose, is generally 40 to 70 nm, preferably 40 to 60 nm.

It should be noted that the arrangement state of the needle-like island phases 3 in the resin layer 1 may be verified or recognized, for example, with a transmission electron microscope (TEM), or the like.

Next, a method of producing the resin hose of the present invention is described. That is, the resin composition is prepared in accordance with the above-mentioned method, and is subjected to extrusion molding on a mandrel into a hose shape. Thus, a resin hose having a single-layer structure formed only of the resin layer 1 of a tubular shape can be produced. A shearing force generated by the extrusion allows the needle-like island phases 3 to be arranged along the longitudinal direction (extrusion direction) of the hose. It should be noted that the use of the mandrel may be omitted.

A temperature at the time of the extrusion molding is preferably 250 to 350°C, particularly preferably 260 to 330°C. When the temperature is excessively low, there is observed such a tendency that the extrusion molding cannot be performed owing to an increase in viscosity. When the temperature is excessively high, there is observed such a tendency that the components (A) and (B) are melted to fall into a completely compatible state, and hence the needle-like island phases 3 are not formed.

The speed of the extrusion is generally 1 to 30 m/min, preferably 5 to 20 m/min. Further, a screw rotation number is generally 10 to 600 rpm, preferably 20 to 150 rpm, and a discharge amount is generally 2 g/min to 100 kg/min, preferably 20 g/min to 3 kg/min.

It should be noted that, after the extrusion step, the temperature may be controlled through water cooling treatment, oil bath treatment, or the like to control the arrangement state of the needle-like island phases 3.

The resin hose of the present invention is not limited to the single-layer structure formed only of the special resin layer 1 (see FIG. 1), and may have a multi-layer structure of two or more layers as appropriate depending on the application of the hose. A rubber layer may be formed on the inner peripheral side or outer peripheral side of the resin layer 1, and a reinforcing layer formed of reinforcing threads or the like may be interposed between the constituent layers of the hose.

The hose inner diameter and hose outer diameter of the resin hose of the present invention, which vary depending on the application of the hose, are generally 1 to 69.5 mm and generally 1.5 to 70 mm, respectively. The thickness of the resin layer 1 is generally 0.25 to 20 mm, preferably 0.5 to 5 mm.

### [Examples]

Hereinafter, the present invention is more specifically described by way of examples. However, the present invention is not limited to the following examples without departing from the scope of the invention.

First, prior to Examples and Comparative Example, the following materials were prepared.
(Aliphatic polyamide (A))
PA612 (DIAMID D22 manufactured by DAICEL-EVONIK. LTD.)
(Semi-aromatic polyamide (B))
PA9T (N1001D-U03 manufactured by KURARAY CO., LTD.)
(Diisobutyl adipate (C))
Diisobutyl adipate manufactured by WAKO PURE CHEMICAL INDUSTRY
(Impact modifier)
Maleic anhydride-modified ethylene-butene copolymer (TAFMER MH7020 manufactured by MITSUI CHEMICALS, INC.)
(Plasticizer)
N-Butylbenzenesulfonamide (BM-4 manufactured by DAIHACHI CHEMICAL INDUSTRY CO., LTD.)

### (Example 1)

Components shown in Table 1 below were blended at ratios shown in the table, and were kneaded with a co-rotating twin-screw kneader to prepare a resin composition. Then, the resin composition was subjected to extrusion molding with an extrusion molding machine (manufactured by Japan Steel Works, Ltd., TEX30α) to produce a resin hose having a single-layer structure (inner diameter: 6 mm, outer diameter: 8 mm).

It should be noted that the conditions at the time of the extrusion molding were asfollows:extrusion temperature: 280°C, extrusion speed: 5m/min, screw rotation number: 40 rpm, and discharge amount: 100 g/min.

### (Examples 2 to 6 and Comparative Examples 1 to 5)

Resin compositions were prepared in accordance with Example 1 except that the kinds, blending amounts, and the like of the components were changed as shown in Table 1 below. Then, in accordance with Example 1, resin hoses each having a single-layer structure were produced using the resin compositions.

[Table 1]

| (Part(s) by weight) | | | | | | | | | | | |
|---|---|---|---|---|---|---|---|---|---|---|---|
| | Example | | | | | | Comparative Example | | | | |
| | 1 | 2 | 3 | 4 | 5 | 6 | 1 | 2 | 3 | 4 | 5 |
| Aliphatic polyamide (A) | 10 | 30 | 50 | 60 | 10 | 10 | - | 70 | 10 | 60 | 30 |
| Semi-aromatic polyamide (B) | 90 | 70 | 50 | 40 | 90 | 90 | 100 | 30 | 90 | 40 | 70 |
| Diisobutyl adipate (C) | 0.5 | 0.5 | 0.5 | 0.5 | 0.1 | 1.5 | 0.5 | 0.5 | - | - | 2 |
| Impact modifier | 5 | 5 | 5 | 5 | 5 | 5 | 5 | 5 | 5 | 5 | 5 |
| Plasticizer | 5 | 5 | 5 | 5 | 5 | 5 | 5 | 5 | 5 | 5 | 5 |
| Fuel permeation amount (mg·mm/cm²/day) | 0.45 | 0.5 | 0.52 | 045 | 0.43 | 0.41 | <0.1 | 2.3 | 1.4 | 1.8 | 1.2 |
| Fuel barrier property (evaluation) | ○ | ○ | ○ | ○ | ○ | ○ | ○ | × | × | × | × |
| Tensile modulus of elasticity (MPa) | 1,530 | 1,480 | 1,540 | 1,250 | 1,560 | 1,580 | 1, 890 | 860 | 1,150 | 1,080 | 1,520 |
| Rigidity (evaluation) | ○ | ○ | ○ | ○ | ○ | ○ | × | × | × | × | ○ |
| Presence or absence of needle-like island phases | ○ | ○ | ○ | ○ | ○ | ○ | × | × | × | × | × |

The thus obtained products of Examples and Comparative Examples were used in evaluations for respective characteristics based on the following criteria. Table 1 above also shows the results of the evaluations.

### (Fuel permeation amount (fuel barrier property))

A hose having both ends sealed with Swagelok fittings was filled with a mixed fuel liquid (FC/E10) of Fuel C (toluene: isooctane=50: 50 (on a volume basis)) and ethanol (Fuel C:ethanol=90:10 (on a volume basis)), and was then left to stand at 40°C for 1 month to be stabilized. After that, the content (mixed fuel) was discharged. Next, the hose was filled again with a fresh mixed fuel (FC/E10), and was then left to stand in a predetermined temperature cycle environment and measured for its fuel permeation amount every 24 hours. This operation was repeated three times, and the largest value among the three measured values was defined as a fuel permeation amount in a single test. In the evaluation, a case where the fuel permeation amount was 0.75 or less (mg·mm/cm²/day) was represented by Symbol "○", and a case where the fuel permeation amount was more than 0.75 (mg·mm/cm²/day) was represented by Symbol "x".

### (Tensile strength (rigidity))

Resin films, which are obtained by subjecting each of the resin compositions of Examples and Comparative Examples to extrusion molding (260 to 280°C) with a single-layer extruder having a T-die head, were used in measurements of tensile moduli of elasticity (MPa) in accordance with JIS K7161. In the evaluation, a case where the tensile modulus of elasticity was 1,200 to 1,800 MPa was represented by Symbol "○", and a case where the the tensile modulus of elasticity was less than 1,200 MPa or more than 1,800 MPa was represented by Symbol "×".

### (Presence or absence of needle-like island phases)

The presence or absence of the needle-like island phases in the resin layer of each hose was observed with a TEM (manufactured by JEOL Ltd. , JEM-2100). In the evaluation, a case where needle-like island phases each formed only of the semi-aromatic polyamide (B) were present in a sea phase containing the aliphatic polyamide (A) and the semi-aromatic polyamide (B) as main components thereof, and the needle-like island phases were arranged along the longitudinal direction (extrusion direction) of the hose, was represented by Symbol "○", and a case where the needle-like island phases were not present, was represented by Symbol "×".

As apparent from the foregoing results, all the products of Examples had the needle-like island phases arranged along the longitudinal direction (extrusion direction) of the hose, and hence were excellent in fuel barrier property and rigidity.

In contrast, all the products of Comparative Examples had no needle-like island phases arranged therein, and hence were poor in at least one of fuel barrier property and rigidity.

It should be noted that, although specific embodiments of the present invention are described in Examples above, Examples above are for illustrative purposes only and are not to be construed as limitative. It is intended that various modifications apparent to a person skilled in the art are within the scope of the present invention.

### [Industrial Applicability]

The resin hose of the present invention may be used as, for example, a fuel hose or a refrigerant-transporting hose (such as an air conditioner hose or a radiator hose) of an automobile, and, in addition to the automobile, may also be used for, for example, other transport machines (such as industrial transport vehicles including an aircraft, a forklift, an excavator, and a crane, and railroad vehicles).

### [Reference Signs List]

- 1: resin layer
- 2: sea phase
- 3: needle-like island phase

## Claims

1. A resin hose, comprising a resin layer containing the following components (A) and (B) as main components thereof, and containing the following component (C):
(A) an aliphatic polyamide;
(B) a semi-aromatic polyamide; and
(C) diisobutyl adipate,
wherein the resin layer is formed of
a sea phase formed of the components (A) to (C), and needle-like island phases each formed only of the component (B), the needle-like island phases being arranged along a longitudinal direction of the resin hose.

2. A resin hose as claimed in claim 1, wherein a weight ratio of the component (A) to the component (B) falls within a range of (A)/(B)=10/90 to 60/40.

3. A resin hose as claimed in claim 1 or 2, wherein a content of the component (C) falls within a range of 0.1 part by weight or more and less than 2 parts by weight with respect to 100 parts by weight of a total of the component (A) and the component (B).

4. A method of producing a resin hose according to any one of claims 1 to 3, the method comprising extrusion at a temperature of from 260 to 330°C.

5. A method of producing a resin hose as claimed in claim 4, wherein arrangement of needle-like island phases along a longitudinal direction of the resin hose is formed by a shearing force in the extrusion.
